# EUROPÄISCHE PATENTANMELDUNG

(11) **EP 1 632 159 A1**
(43) Veröffentlichungstag der Anmeldung: **08.03.2006**
(21) Anmeldenummer: 05016473.0
(22) Anmeldetag: 29.07.2005
(51) Int. Cl.: A47J 36/02, G01K 1/14

(54) **Behälter zum Kochen von Speisen mit aussenliegenden Verzierungen**

(30) Priorität: 01.09.2004 IT MI20041688
(71) Anmelder: BALLARINI PAOLO & FIGLI S.p.A., 46017 Rivarolo Mantovano (MN) (IT)
(72) Erfinder: Ferron, Francesco, 26041 Casalmaggiore (Cremona) (IT)
(74) Vertreter: Mayer, Hans Benno

(57) **Zusammenfassung**

Behälter (1) zum Kochen von Speisen, mit außenliegenden Verzierungen (5,6), wobei das Schriftbild der Verzierungen, eine Beschriftung oder technische Hinweise, unter Zuhilfenahme von thermochromatischen Lacken vorgenommen wird, wobei diese Lacke bei erhitztem Gefäß ihre Farbe ändern, die durch Benutzer des Behälters (1) gut erkennbar ist.

## Beschreibung

Die vorstehende Erfindung betrifft ein Gefäß zum Kochen von Speisen mit außen angeordneten Verzierungen.

Es ist aus dem Stand der Technik bekannt geworden, dass Gefäße zum Kochen von Speisen meistens aus Metall bestehen, besonders aus Alluminium.

Diese aus Alluminium bestehenden Gefäße sind an der Außenseite mit einer Lackschicht versehen, einmal um das Metall vor unerwünschter Oxidation zu schützen, ferner um Reinigungsarbeiten des Gefäßes einfacher durchführen zu können, wenn dieses einem Waschvorgang, z.B. in einem Geschirrspüler, ausgesetzt wird.

Um Gefäße dieser Art zu verschönern, werden z.B. unter Zuhilfenahme von Siebdruckverfahren, Puffervorgang oder Aufbringen von Abziehbildern, Dekorationen unterschiedlicher Art aufgebracht. Diese Dekorationen können aus Linien, Blumenmustern oder geometrischen Phantasiedarstellungen bestehen.

All dies um das Gefäß von seinem Aussehen her zu verbessern.

Der Nachteil, der den bekannten Gefäßen anhaftet, ist darin zu sehen, dass der Benutzer des Kochgefäßes niemals darüber informiert ist, welche Temperatur im Inneren des Gefäßes oder an der Außenwand des Gefäßes, welches auf einer Wärmequelle angeordnet ist, vorherrscht.

Aus diesem Grunde ist es dem Benutzer nicht bekannt, ob das Gefäß die für den Kochvorgang gewünschte Temperatur erreicht hat, ferner besteht die Gefahr von Verbrennungen aufgrund eines Gefäßes, welches sehr heiß ist.

Es ist daher Aufgabe der vorstehenden Erfindung, die Nachteile des Standes der Technik zu vermeiden und ein Gefäß zum Kochen von Speisen vorzuschlagen, bei welchem es möglich ist, einen erhitzten Zustand des Gefäßes oder eine genaue Temperatur, die das Kochgefäß annimmt, anzuzeigen.

Diese Aufgabe wird mit einem aus Metall bestehenden Kochgefäß, vorzugsweise aus Alluminium, welches an der Außenseite mit einer Lackschicht bedeckt ist und ferner mit Dekorationen und

Hinweisschriften bereichert ist, dadurch erreicht, dass Zeichnungen bzw. Schriftzüge unter Einsatz eines Materials aufgebracht sind, welches mit thermochromatischen Pigmenten angereichert ist.

Um ein Beispiel zu nennen, es besteht die Möglichkeit, ein Kochgefäß für die Zubereitung von Speisen vorzuschlagen, welches an der Außenseite eine Lackschicht aufweist, die z.B. hellgraue Farbtönung aufweist, und auf diese Beschichtung werden Dekorationen mit unterschiedlicher Farbgebung aufgebracht, z.B. in schwarzer Farbe oder Schriftzüge oder Hinweissymbole, die gleiche Farbe aufweisen, wobei diese Dekorationen bzw. diese Schriftzüge oder Symbole thermochromatische Pigmente enthalten, die ihre Farbe dann ändern, wenn eine bestimmte Kochtemperatur erreicht wurde, wobei die Dekorationen bzw. die Hinweisschriftzüge in veränderter Farbe erscheinen, z.B. in roter oder oranger Farbe. Der Erfindungsgegenstand wird nun genauer beschrieben und anhand eines Ausführungsbeispieles in den beigefügten Zeichnungen dargestellt. Es zeigen:
Figur 1 ein Gefäß zum Kochen von Speisen, das ringförmige Dekorationen aufweist.
Figur 2 ein Gefäß zum Kochen von Speisen, welches eine Dekoration bestehend aus parallel angeordnenten Linien aufweist.
Figur 3 ein Gefäß zum Kochen von Speisen, mit dem Schriftzug "Achtung: Temperatur 120°C".
Figur 4 zeigt ein kaltes Kochgefäß, welches Schriftzüge oder Symbole in thermochromatischer Farbe aufweist, die nur in erhitztem Zustand des Kochgefäßes sichtbar werden.
Figur 5 zeigt einige Symbole mit Hinweisen zur Betriebssicherheit eines heißen Kochgefäßes.

Wie den Figuren der Zeichnungen zu entnehmen ist, weist das mit 1 gekennzeichnete Kochgefäß einen Henkel 2 auf, und über einen Boden 3 wird das Kochgefäß während des Kochvorganges der Speisen auf einer Wärmequelle abgesetzt.

Diese Wärmequelle kann von einem Gasbrenner, einer elektrischen Heizplatte aus Metall oder einem keramischen Kochfeld gebildet sein.

Das Gefäß 1, bestehend aus Metall, in vorteilhafter Weise aus Alluminium, weist eine äußere Beschichtung 4 auf; diese Beschichtung kann z.B. aus einer Lackschicht bestehen, die über ein Spritzverfahren aufgetragen wurde.

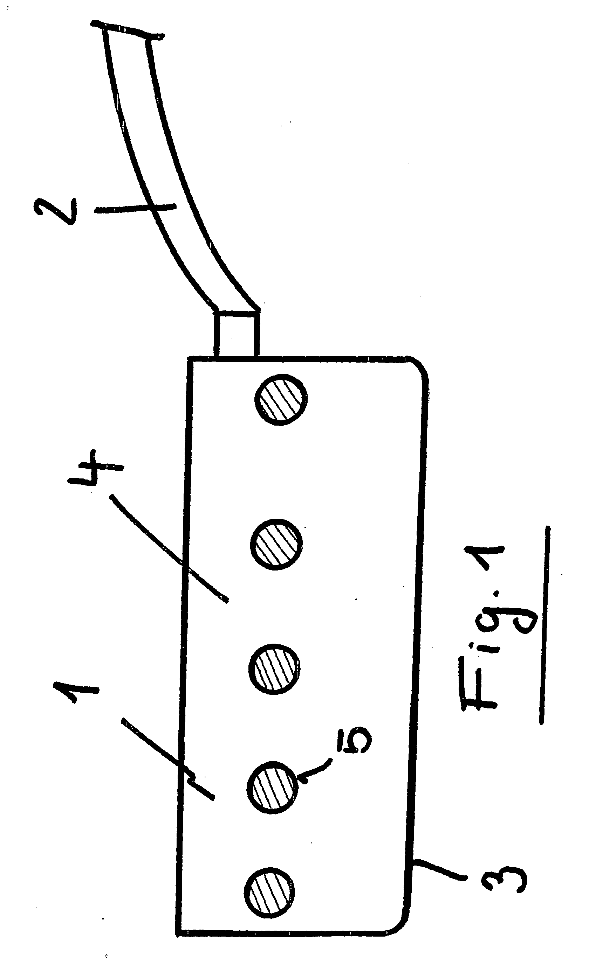

Auf der Beschichtung 4 werden Dekorationen 5 angebracht, bestehend aus reinen Phantasiegebilde, z.B. Darstellungen von Blumen oder geometrische Formen, z.B. einer Anzahl von Ringen, wie dies in Figur 1 gezeigt ist.

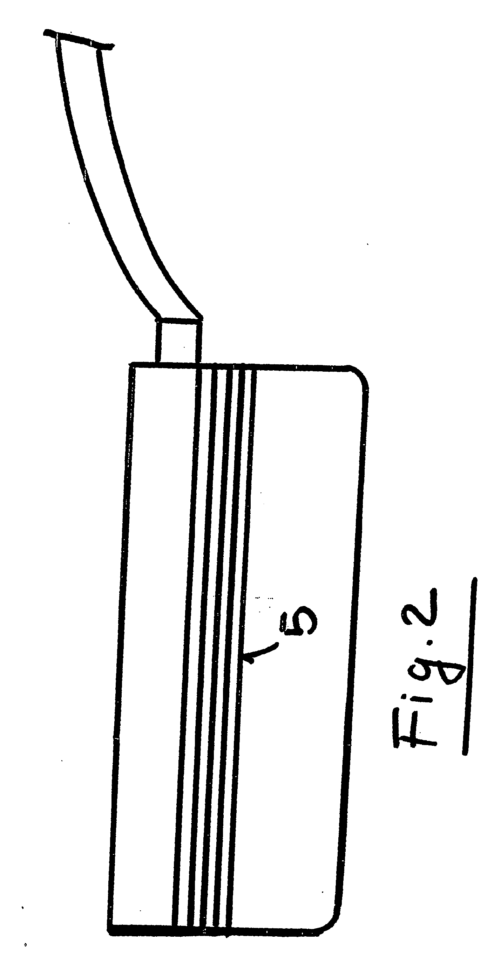

Die Dekorationen 5 können auch aus parallel angeordneten Linien bestehen, wie dies in Figur 2 dargestellt ist.

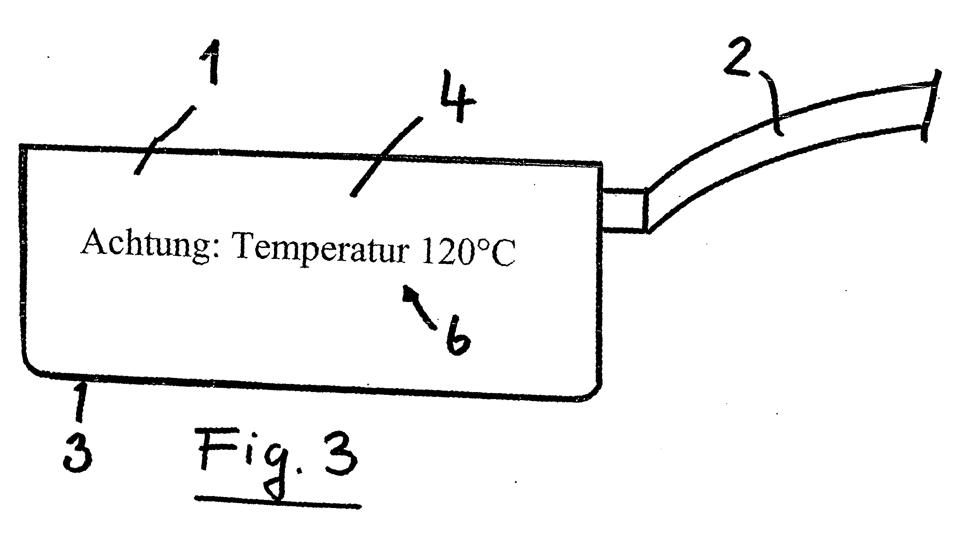

Der Figur 3 kann entnommen werden, dass das Kochgefäß 1 an seiner Außenseite 4, die von einer hitzebeständigen Lackschicht abgedeckt ist, auch eine Hinweisschrift 6 aufnimmt, die z.B. "Achtung: Temperatur 120°C" angibt.

Sowohl die geometrischen Dekorationen 5, die in den Figuren 1 und 2 dargestellt sind, als auch die Hinweisschrift 6, wie dies in Figur 3 dargestellt ist, werden unter Zuhilfenahme von Lacken ausgeführt, die thermochromatische Pigmente enthalten.

Dank der Verwendung von thermochromatischen Lacken, besteht die Möglichkeit die Dekorationen 5 so auszuwählen, dass diese in kaltem oder nur leicht angewärmtem Zustand des Gefäßes 1 eine sogenannte "kalte" Farbgebung annehmen, z.B. grüne oder blaue Farbgebung, während bei einem Kochgefäß, welches eine Betriebstemperatur erreicht hat, ein Verändern der Dekorationen 5 bzw. des Schriftzuges 6 eintritt und die Farbgebung einer "warmen" Farbgebung entspricht, z.B. einem lebhaftem rot oder einem orange. Somit wird dem Benutzer angezeigt, dass das Kochgefäß eine Temperatur aufweist, die für den Kochvorgang geeignet ist, wobei besonders angezeigt wird, dass das Kochgefäß 1 eine Temperatur erreicht hat, die eine Gefahrenquelle bei Berührung mit sich bringt und zu Verbrennungen führen kann.

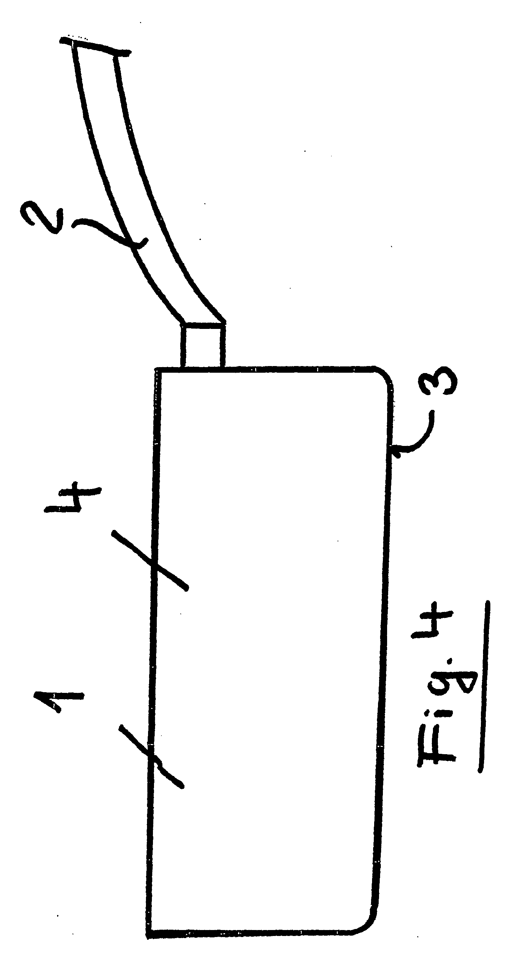

Wie der Figur 4 zu entnehmen ist, kann der Behälter 1 eine äußere Beschichtung aufweisen.

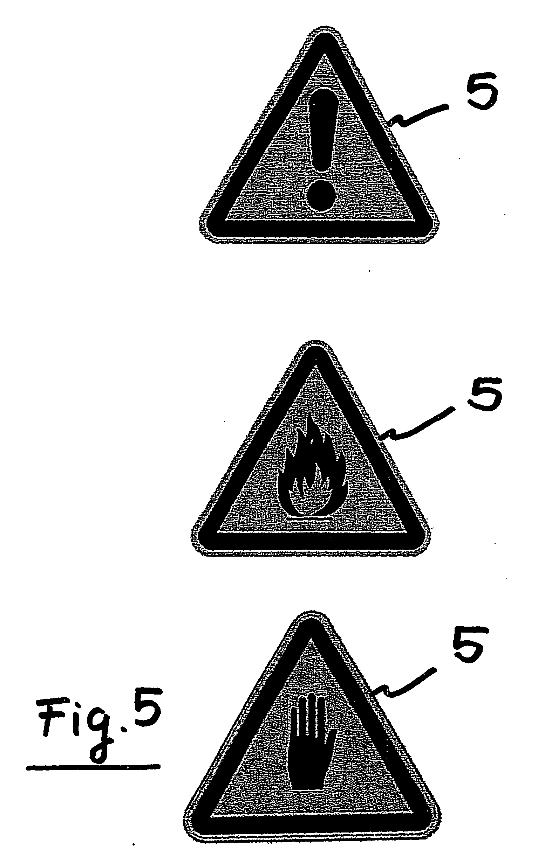

Die Beschriftung sowie die aufgebrachten Anzeigesymbole werden in vorteilhafter Weise in der gleichen Farbgebung wie die außenliegende Beschriftung 4 vorgenommen, was zur Folge hat, dass bei kaltem Kochgefäß die Beschriftung oder die Hinweissymbole, wie in Figur 4 und 5 dargestellt, nicht sichtbar werden.

Lediglich nach Erhitzen des Kochgefäßes 1, dank der Verwendung von Schriften oder Hinweissymbolen und dank der Verwendung von Lacken, die thermochromatische Pigmente enthalten, werden diese Schriftzüge oder Hinweissymbole sichtbar, wie in den Figuren 1, 2 und 3 dargestellt.

Die Dekorationen 5 bzw. die Hinweissymbole 6 können am Kochgefäß 1 unter Zuhilfenahme verschiedener Techniken angebracht werden. Diese Techniken sind aus dem Stand der Technik her bekannt und bestehen im Einsatz von Siebdruckverfahren, Abziehbildern, Pufferverfahren oder ähnlichem.

Die Dekorationen 5 sowie die Schriftzüge 6 werden in vorteilhafter Weise durch Aufbringen eines Klarlackes, der hitzebeständig ist, geschützt, wodurch die Dekorationen 5 als auch die Hinweisschriften 6 gegen den Eingriff von agressiven Mitteln geschützt werden, z.B. Spülmitteln, die in einer Geschirrspülmaschine zum Einsatz kommen.

## Patentansprüche

1. Behälter (1) zum Kochen von Speisen, der mit Dekorationen (5), Schriftzügen oder Hinweissymbolen (6) an der Außenseite des Kochgefäßes (1) versehen ist, wobei das Gefäß (1) in vorteilhafter Weise aus Alluminium besteht, und an der Außenseite durch eine Lackschicht (4) abgedeckt ist und durch Dekorationszeichnungen (5) verziert wurde bzw. Hinweisschriften (6) aufweist, **dadurch gekennzeichnet, dass** die Dekorationen (5) bzw. die Hinweisschriften (6) mittels Materialien erfolgen, die thermochromatische Pigmente enthalten.

2. Gefäß zum Kochen von Speisen, nach Patentanspruch 1, **dadurch gekennzeichnet, dass** die Schriftzüge oder Hinweissymbole (6) bei kaltem Zustand des Gefäßes (1) die gleiche Farbe aufweisen, wie die Außenbeschichtung (4) des Kochgefäßes (1) und bei erhitztem Gefäß (1) eine vom Verwender gut erkennbare Einfärbung erfahren.

3. Gefäß zum Kochen von Speisen, nach Patentanspruch 2, **dadurch gekennzeichnet, dass** der Lack (5, 6) zur Herstellung der Schriften oder Hinweissymbolen, die thermochromatische Pigmente beinhalten, bei erhitztem Kochgefäß (1) rote oder orangefarbene Einfärbung annehmen.

4. Gefäß zum Kochen von Speisen, nach den Patentansprüchen 1-3, **dadurch gekennzeichnet, dass** die Dekorationen (5) sowie die Hinweisbeschriftungen (6) von einem Klarlack abgedeckt sind und der Klarlack hitzebeständig und beständig gegen Korrosion ist.

5. Gefäß zum Kochen von Speisen, nach Patentanspruch 1, **dadurch gekennzeichnet, dass** die Dekorationen (5) bei kaltem Gefäß (1) eine Farbgebung aufweisen, die ähnlich der Außenbeschichtung (4) des Kochgefäßes ist und bei erhitztem Kochgefäß eine zur Außenbeschichtung in Kontrast stehende Farbe annehmen, die vom Benutzer deutlich sichtbar gegenüber der Farbe des Beschichtungsmateriales (4) ist.
